Europäisches Patentamt

European Patent Office

Office européen des brevets

(11) Publication number: **0 094 162**
A2

# EUROPEAN PATENT APPLICATION

(21) Application number: 83302220.5

(22) Date of filing: 19.04.83

(51) Int. Cl.³: **H 04 M 19/02**, H 04 Q 3/00

(30) Priority: 10.05.82 US 376680

(43) Date of publication of application: 16.11.83
Bulletin 83/46

(84) Designated Contracting States: **AT DE FR GB NL SE**

(71) Applicant: NORTHERN TELECOM LIMITED,
1600 Dorchester Boulevard West, Montreal Quebec
H3H 1R1 (CA)

(72) Inventor: McHarry, John Dyer, 110 Greenfield Road,
Chapel Hill North Carolina 27514 (US)
Inventor: Pollard, Brian Joseph, 93 Grenfell Crescent,
Ottawa Ontario, K2G 0G5 (CA)

(74) Representative: Crawford, Andrew Birkby et al, A.A.
THORNTON & CO. Northumberland House 303-306 High
Holborn, London WC1V 7LE (GB)

(54) A method of producing voltage signals with a dc component and great dynamic range.

(57) A method for producing a high level voltage signal (e.g. ringing voltages) for a telephone system is described. Each cycle of the signal is comprised of one positive half cycle of one frequency followed by one negative half cycle of a lower frequency (for a negative DC component). The two frequencies are chosen such that the total period, for the tho half cycles, constitutes one cycle at the frequency of the high level voltage signal desired. This method is well suited to implementation by a ROM controlled signal generator.

0094162

This invention relates generally to producing high-level signalling in a telephone switching office, and more particularly to producing ringing voltages of great dynamic range while maintaining a DC component on the telephone line.

Ringing voltages commonly consist of an AC (alternating current) component at a discrete frequency superimposed on a steady-state DC (direct current) voltage. One AC component commonly used in North America is 86 volts (RMS) at a sinusoidal frequency of 20 Hz superimposed on a -48 volt DC level. This results in a composite ringing voltage waveform that alternates between a large negative value and a relatively small positive value; this of course results in an overall negative DC component.

Ringing generators for producing ringing voltages are well known in the prior art. U.S. patent 4,152,670 dated May 1, 1979 by A. Rimondini et al depicts one such generator. U.S. patent 4,284,854 dated August 18, 1981 by R. Hayward, J. Bottrill, and R.C. Dittburner depicts another generator suited for producing ringing voltages using digital concepts.

## Summary of the Invention

The present invention is directed to increasing the dynamic range of high-level signals employed in telephone systems.

More specifically, the present invention is directed to producing high-level signals (such as ringing voltages) by using a waveform that comprises, for one cycle, one positive half cycle of one frequency, followed by one negative half cycle of a lower frequency. The two frequencies are chosen such that the total period, for the two half cycles, constitutes one cycle at the ringing frequency desired.

The result is a composite ringing voltage that reaches both the positive and negative limits available and, while not as harmonic free as is the situation when a pure sine wave is superimposed on the DC level, results in an acceptable harmonic level for telephone signalling purposes.

In the illustrative embodiment described, the required waveform is generated by two main circuits. The first main circuit is a pulse width modulation (PWM) signal generator for producing a 32 KHz train of pulses having an adjustable duty cycle (i.e. pulse width) for driving the second main circuit, a switching bridge (i.e. power converter). By varying the pulse width of the train of pulses, in a predetermined manner, the switching bridge can produce a variety of different waveforms. This technique is described in aforementioned U.S. patent 4,284,854.

Stated in other terms, the present invention is a method of producing an alternating current waveform with a direct current component, each cycle of the waveform having a positive portion and a negative portion, the method comprising: generating, as the positive portion, a positive half cycle of a sine wave having a first frequency; and generating, as the negative portion, a negative half cycle of a sine wave having a second frequency, wherein the second frequency does not equal the first frequency.

Stated in yet other terms, the present invention is a method of producing an alternating current waveform with a direct current component, each cycle of the waveform having a positive portion and a negative portion, wherein the absolute maximum magnitudes of the positive portion and the negative portion are equal, the method comprising: generating, as the positive portion, a positive half cycle of a sine wave having a first frequency; and generating, as the negative portion, a negative half cycle of a sine wave having a second frequency, wherein the second frequency does not equal the first frequency.

Brief Description of the Drawings

The present invention will now be described in more detail with reference to the accompanying drawings, wherein like parts in each of the several figures are identified by the same reference character, and wherein:

Figure 1 depicts the waveform of a sinusoidal wave;

Figure 2 depicts the waveform of Figure 1 superimposed upon a DC level;

Figure 3 depicts the waveform employed in the present invention;

Figures 4 and 5 are simplified schematics of a circuit for producing the waveform of Figure 3;

Figure 6 depicts several waveforms useful for understanding the operation of the circuitry depicted in Figures 4 and 5.

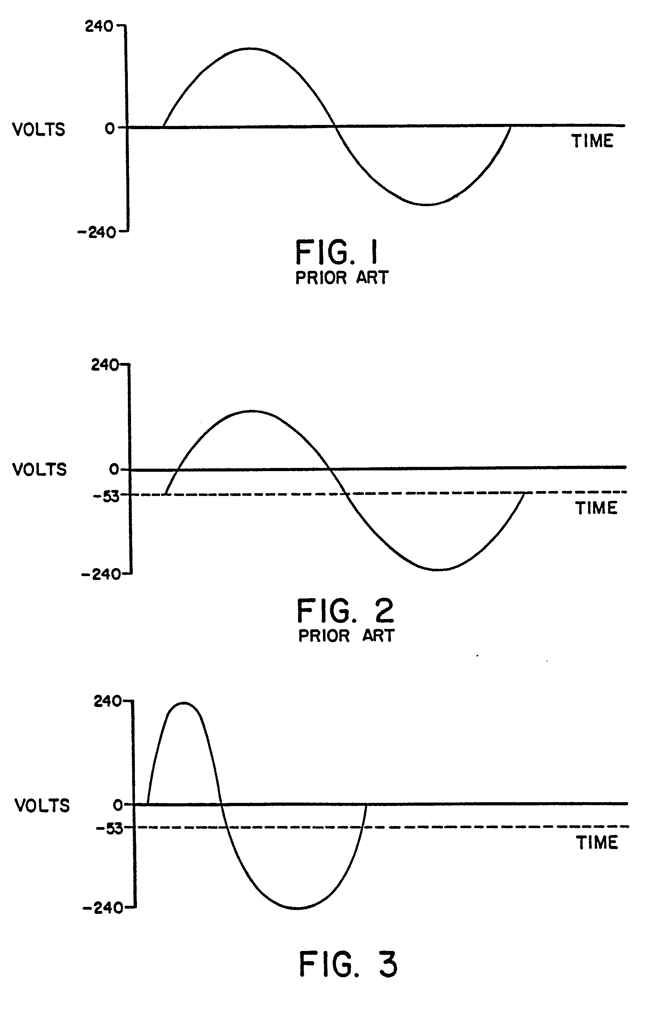

Figure 1 depicts a waveshape well known as a sine wave. Sine wave generators are well known, and it is this sine wave shape that is commonly used to cause ringing in telephone systems. A typical sine wave for that application has a frequency of 40 Hz and an RMS voltage of 130 volts (i.e. 184 volts peak).

Figure 2 depicts such a sine wave superimposed upon a DC level of -53 volts. It will be noted that it is the usual practice, at present in North America, to have a DC level of approximately -48 volts on a telephone line. The result, as depicted in Figure 2, is an AC waveform that varies from a positive high of 131 volts to a negative low of 237 volts. In other words, a voltage swing of +131 volts to -237 volts,

4 0094162

peak-to-peak. The maximum RMS (root-mean-square) AC voltage is. limited by clipping of the negative peak. At higher frequencies (e.g. 66 2/3 Hz), higher AC voltages are required.

It can be seen that the waveform of Figure 3 results in a ringing voltage of greater dynamic range than that depicted in Figure 2. The waveform of Figure 3 is comprised of a positive portion and a negative portion having equal absolute maximum values. The positive portion has a shorter duration than does the negative portion resulting in the waveform of Figure 3 having a DC component shown in the Figure by a dashed line.

In fact, the single period of the waveform depicted in Figure 3 is comprised of two half cycles of different frequencies. The positive portion is one positive half-cycle of one frequency, and the negative portion is one negative half-cycle of a lower frequency. The frequencies are chosen such that the total period of the two half cycles constitutes one cycle at the desired ringing frequency.

In the illustrative embodiment of Figure 3, the positive portion has a frequency of 102 Hz (half-cycle period equal to 4.90 milliseconds) and the negative portion has a frequency of 49.5 Hz (half-cycle period equal to 10.1 milliseconds) for a composite wave having a frequency of 66 2/3 Hz (period equal to 15.0 milliseconds).

As stated before, the positive excursion, of the Figure 3 waveform, is of shorter duration than the negative. The result is that the output has a negative DC component. The DC component is given by:

$$V_{DC} = \frac{2}{\pi} V_P \frac{T_1 - T_2}{T_1 + T_2}$$

where: $V_{DC}$ is the DC component;

$V_p$ is the peak voltage;

$T_1$ is the duration of the positive half cycle;

$T_2$ is the duration of the negative half cycle.

Also, $T_1 + T_2 = \dfrac{1}{F}$

where: F is the ringing frequency.

For the illustrative embodiment of Figure 3,

$$V_{DC} = \frac{2}{\pi} \ (240) \ \left(\frac{-5.2}{15}\right) = -53 \text{ volts}$$

Mathematical analysis and measurement both show this waveform (Figure 3) to contain a sinusoidal component at 66 2/3 Hz. The RMS value is given by:

$$V_{AC} = \frac{0.95 \times V_p}{\sqrt{2}}$$

where $V_{AC}$ is the RMS value; and

$V_p$ is the peak voltage.

For the illustrative embodiment of Figure 3,

$$V_{AC} = \frac{0.95 \times 240}{\sqrt{2}} = 161 \text{ volts.}$$

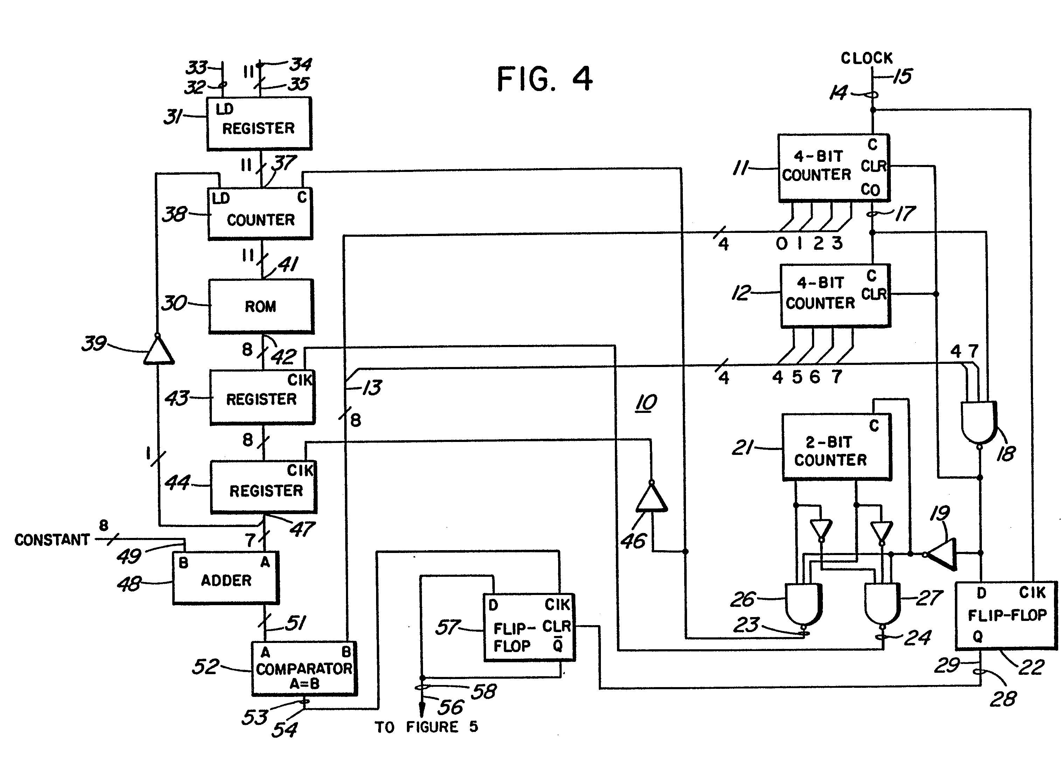

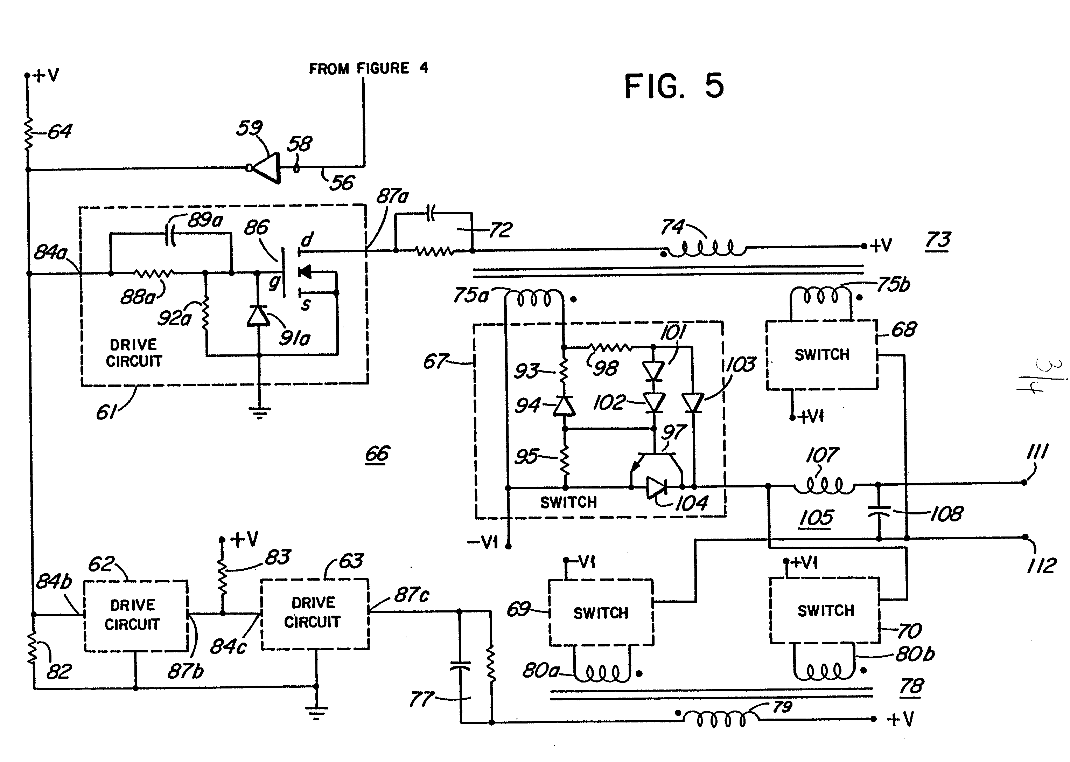

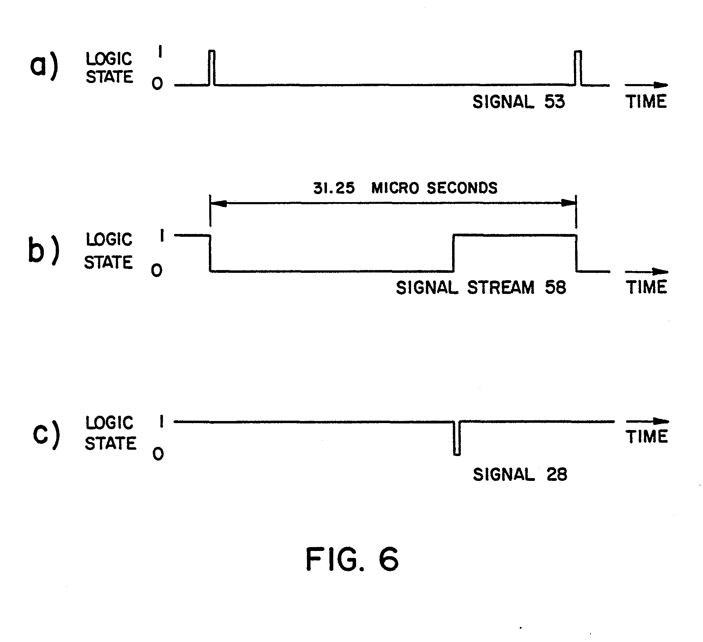

Figure 4, depicting a simplified schematic for producing the waveshape shown in Figure 3, will now be described. Figure 4 depicts what can be referred to generally as a pulse width modulation (PWM) signal generator 10, which generates a stream of periodically occurring high and low logic states (see Fig. 6).

Four bit counter 11 and four bit counter 12 are connected as shown to produce a sequential series of 160 data bytes on real time bus 13. Counter 11 is responsive to clock signal 14 appearing on clock lead 15. Clock signal 14 has a pulse repetition frequency (PRF) of 5.12 MHz.

Clock signal 14 is applied to the count input C of counter 11 and is counted to provide four least significant bits, 0 to 3 (respectively, in increasing order of significance), on real time bus 13. The carry output CO of counter 11 provides a carry signal 17 once every 16 pulses to the input C of counter 12. Hence the frequency of carry signal 17 on carry output CO of counter 11 is 320 KHz (i.e. clock signal 14 divided by sixteen).

Signal 17 from carry output CO of counter 11 is applied to the count input C of counter 12. Counter 12 counts the 320 KHz signal 17 to provide the four remaining bits, 4 to 7 (respectively, in increasing order of significance), on real time bus 13. NAND gate 18 is connected to the counters 11 and 12, as depicted, so as to cause counter 12 to act as a divide-by-ten circuit whereby the most significant bit (i.e. bit 7) on real time bus 13 has a PRF of 32 KHz. The output of NAND gate 18 is connected to the clear input CLR of both counters 11 and 12 and becomes asserted with each occurrence of 160 pulses of clock signal 14 (i.e. at a 32 KHz rate). This causes counters 11 and 12 to be cleared to all zeroes and to commence to generate another sequential series of 160 data bytes.

The output of NAND gate 18 is also buffered by an inverter 19 which has its output connected both to the count input C of counter 21 and to NAND gates 26 and 27. The 32 KHz signal from inverter 19 is divided by four by counter 21 and is used to generate complementary phased 8 KHz timing signals 23 and 24 at the output of NAND gates 26 and 27, respectively.

Flip-flop 22 has a clock input ClK connected to receive the 5.12 MHz PRF clock signal 14 on clock lead 15. Clock signal 14, in combination with the output of NAND gate 18 causes flip-flop 22 to generate a timing signal 28 at a 32 KHz rate at its Q output. Signal 28 on lead 29 coincides with the occurrence of each highest value data byte on real time bus 13.

Binary data bytes, each representative of a discrete period of time, are stored at addressable locations in read only memory (ROM) 30. ROM 30 (e.g. a Texas Instruments model 2716) has the capacity to store several different signals but only one stored signal will be described herein to avoid unduly complicating the description. The data bytes, stored in ROM 30, are arranged in groups of address ranges, each range corresponding to a predetermined waveform (i.e. shape and magnitude). An address range, relating to signals having an alternating current component, consists of a plurality of addresses. Note that if the signal involved were a direct current signal, the address range would consist of only a single address.

In this particular illustrative embodiment, one data byte consists of eight bits and each data byte includes one data bit which is used to control access to ROM 30. This data bit is consistently in a first state throughout the address range for the signal in question, except for the last address of the range where the stored data bit is of a second state. When there is only one address in a range, the data bit is of the second state at that one address. When this data bit occurs, during a readout from ROM 30, the next readout from ROM 30 is derived from the beginning of an address range. The use of this data bit will become more apparent in the following description.

Register 31 (e.g. a Texas Instruments model 74LS374) receives a load signal 32 on control lead 33 and data, comprising function address 34, on bus 35. Function address 34 is registered in register 31 under the control of load signal 32. The function address 34 is available from the output of register 31 at the data input 37 of counter 38 (e.g. 2 Texas Instruments model 74LS163). Counter 38 also includes a count input C which receives the 8 KHz PRF signal 23 from NAND gate 26. Counter 38 also has a load input LD, connected to the output of inverter 39, for controlling operation of counter 38. If the output of inverter 39 is asserted (i.e. a logic 1), then counter 38 is set at the function address 34 in register 31 from which point it is caused to count at an 8 KHz rate (due to timing signal 23 at the C input of counter 38).

The output of counter 38 is connected to the address input 41 of ROM 30. In response to the address signals applied to input 41, ROM 30 produces, on its data output 42, data bytes from its corresponding addressed storage locations as counter 38 progresses through a range.

Registers 43 and 44 are connected in series with the output of ROM 30 as shown. Register 43 is controlled by signal 24 from NAND gate 27 being applied to its clock input ClK. Similarly, register 44 is controlled by the inverted signal 23 (inverted by inverter 46) being applied to its clock input ClK. These signals, applied to the clock input ClK of registers 43 and 44, provide the time related data bytes (read from ROM 30) at the output 47 of register 44 delayed by one 8 KHz period (from the time they appeared at data output 42 of ROM 30).

One of the data bits from output 47 of register 44 (the most significant bit) is inverted by inverter 39 and applied at the load input LD of counter 38. By this method, counter 38 is again loaded with either the previous counting starting point (as stored in register 31) or, in the event that a new function is applied from register 31, at the required new starting point.

Adder 48 (e.g. 2 Texas Instruments model 74LS283) has an A input connected to output 47 of register 44 and a B input connected to a hard wired constant, of value 16, via a bus 49.

In this embodiment, ROM 30 has an eight bit data byte output. As one of these bits is used for the load control of counter 38, there are seven remaining bits yielding 128 codes (i.e. $2^7$). However, there are 160 data bytes produced on real time bus 13. Hence the output of ROM 30 is augmented by the constant sixteen in adder circuit 48 to provide a useable code range from 16 to 144 which is adequate for the operation of the circuitry yet to be described.

Bus 51 carries the sum of the A input and the B input of adder 48. This sum is applied to the A input of digital comparator 52 (e.g. 2 Texas Instruments model 74LS65). The B input of comparator 52 is connected to receive the repetitive sequence of data bytes from real time bus 13. Each time that the logic states of the inputs A and B of comparator 52 correspond, the A = B output of comparator 52 becomes asserted (i.e. becomes a logic 1), providing timing signal 53 on lead 54.

Timing signal 53 is applied to the clock input ClK of D-type flip-flop 57 and period signal 28 is applied to the clear input CLR of flip-flop 57. A signal stream 58 of width modulated pulses is generated on lead 56 connected to the $\overline{Q}$ output of flip-flop 57. The $\overline{Q}$ output is also connected back to the D input of flip-flop 57 as depicted. Consequently, flip-flop 57 operates under the control of timing signal 53 and period signal 28 to produce a stream of width modulated pulses 58 at a 32 KHz rate. The stream of pulses 58 is used to control the switching bridge 66 shown in Figure 5; the output of bridge 66 is dependent upon the duty cycle of signal stream 58.

Figure 5 depicts the circuitry for producing high level signal voltages in response to the low level stream of pulses 58 generated by the circuitry of Figure 4. The pulses of signal stream 58 are raised to a higher voltage level, suitable for the operation of drive circuits 61, 62 and 63 by inverter 59 having an output connected to a +V power source via resistor 64. Voltage V is typically in the range of twenty to thirty volts. Voltage V1, to be discussed later, is typically about 150 volts; consequently +V1 is +150 volts and -V1 is -150 volts.

In simplistic terms, switching bridge 66 comprises four switches 67, 68, 69 and 70 which are switched in pairs, sequentially at a rate of 32 KHz (i.e. switches 67 and 68 operate together, and switches 69 and 70 operate together). The mean voltage across the output of bridge 66 (i.e. across terminals 111 and 112) is zero if each pair of switches is turned on for an equal time period (i.e. 50% duty cycle). By varying the duty cycle from approximately 20% to 80%, the mean output voltage can be varied from -240 volts to +240 volts. By suitably varying the duty cycle it is possible to generate voltages having a myriad of waveforms, frequencies and DC offset.

Switching bridge 66 includes four switches 67, 68, 69, and 70 and three drive circuits 61, 62, and 63. The switches 67 and 68 are connected to the output of drive circuit 61 via an RC network 72, and a transformer 73 having a primary winding 74 and a pair of secondary windings 75a and 75b. Switches 69 and 70 are connected to the output of drive circuit 63 via an RC network 77 and a transformer 78 having a primary winding 79 and two secondary windings 80a and 80b. The transformers 73 and 78 are each polarized such that when the primary winding is conducting current, the secondary windings provide turn OFF bias to the switches. When current flow through the primary winding is halted, turn ON current is provided by the secondary windings.

Each driver circuit 61 and 62 includes an input connected to the output of the inverter 59. A resistor 82 is also connected between the output of the inverter 59 and ground. The output of the driver circuit 62 is connected to a load resistor 83 and to the input of the driver circuit 63. The driver circuits each function as inverting amplifiers and by this means the signal stream 58 and its complement are used to drive pairs of the switches 67, 68, 69 and 70 in complement.

The signal stream is received at input ports 84a and 84b in each drive circuit 61 and 62 respectively. Each drive circuit includes a metal oxide silicon field effect transistor (MOSFET) 86 with source, drain and gate electrodes s, d and g respectively (e.g. 2N6661). The drain electrode d is connected to an output port 87a, the source electrode is connected to ground and the gate electrode g is connected to the input port 84a via the parallel combination of a resistor 88a and a capacitor 89a. A diode 91a and a resistor 92a are connected in parallel across the gate electrode g and the source electrode s. In operation, each driver circuit acts as an inverting amplifier. The signal at the output port 87b of the driver circuit 62 is received and inverted by the driver circuit 63 to generate at its output port 87c the complement of the signal at the output port 87a of the driver circuit 61.

Each of the switches 67, 68, 69 and 70 includes a series string of a resistor 93, a diode 94 and a resistor 95 connected across the associated secondary winding. An NPN transistor 97 includes an emitter electrode connected at the junction of the resistor 95 and the secondary winding. A resistor 98 is connected at the junction of the secondary winding and the resistor 93 and in series with two diodes 101 and 102 to the base electrode of transistor 97. The base electrode is also connected to the junction of the diode 94 and the resistor 95. A diode 103 is connected between the collector electrode of transistor 97 and the junction of the resistor 98 and the diode 101. A diode 104 is connected across the collector and emitter electrodes in current opposing relationship. In operation, turn ON current from the associated secondary winding flows via the resistor 98, the diodes 101 and 102 and via the base emitter junction of the transistor 97, to cause the transistor 97 to conduct current. Turn OFF bias is developed at the base electrode when current flows in the opposite direction through the secondary winding via the series string of the resistors 95 and 93 and the diode 94, to cause the transistor 97 to cease conduction. Diodes 101, 102 and 103 provide an anti-saturation network to ensure rapid switching of the transistor 97. The diode 104 provides a conducting path for inverse reactive load currents.

Switches 67 and 68 provide a first set of two switches connected to apply a voltage V1 in one direction across the network 105 in response to the signal stream being of a first state. Switches 69 and 70 provide a second set of two switches connected to apply the voltage V1 in the reverse direction across the network 105 in response to the signal stream being of a second state. The network 105 includes a series connection of an inductor 107 and a capacitor 108. Signal output terminals 111 and 112 are connected across capacitor 108, across which the high level signal voltages are derived.

In this embodiment, switching bridge 66 is operated by pulse width modulated signal 58 at the 32 KHz PRF. A value for the inductor 107 in this case has been found to be 50 mh, to produce an output high level signal of suitable quality. However, if the switching bridge were operated by a signal having a lower PRF, for example 8 KHz, the value of the inductor 107 would be increased to obtain an output high level signal of similar quality. Each of the switches 67, 68, 69 and 70 includes a voltage terminal connected as indicated to the negative -V1 or positive +V1 power terminals associated with a power supply (not shown).

The following table is a listing in hexadecimal format (Intel format) of the data byte contents of ROM 30. The waveform of Figure 3 begins at address 6D8 and finishes at address 74E. Note that an address, as depicted in the Table, is defined as follows: the first two characters in the address depict a row, and the final character depicts a column. As examples, the top line, leftmost column of the Table depicts the contents BE at an address 000; the top line, rightmost column of the Table depicts the contents 4D at an address 00F. Consequently, the data for the waveform of Figure 3 commences at data contents 71 (address: 6D8) and finishes at data contents 72 (address: 74E)

### CONTENTS TABLE

| Row Address | Column Address | | | | | | | | | | | | | | | |
|---|---|---|---|---|---|---|---|---|---|---|---|---|---|---|---|---|
| | 0 | 1 | 2 | 3 | 4 | 5 | 6 | 7 | 8 | 9 | A | B | C | D | E | F |
| 00 | BE | BE | BE | BE | BE | BE | BE | BE | 51 | 51 | 50 | 4F | 4F | 4E | 4E | 4D |
| 01 | 4C | 4C | 4B | 4A | 4A | 49 | 49 | 48 | 47 | 47 | 46 | 46 | 45 | 44 | 44 | 43 |
| 02 | 43 | 42 | 41 | 41 | 40 | 40 | 3F | 3E | 3E | 3D | 3D | 3C | 3C | 3B | 3A | 3A |
| 03 | 39 | 39 | 38 | 38 | 37 | 37 | 36 | 36 | 35 | 34 | 34 | 33 | 33 | 33 | 32 | 32 |

| | | | | | | | | | | | | | | | |
|---|---|---|---|---|---|---|---|---|---|---|---|---|---|---|---|
| 04 | 31 | 31 | 30 | 30 | 2F | 2F | 2E | 2E | 2E | 2D | 2D | 2C | 2C | 2C | 2B 2B |
| 05 | 2A | 2A | 2A | 29 | 29 | 29 | 28 | 28 | 28 | 28 | 27 | 27 | 27 | 27 | 26 26 |
| 06 | 26 | 26 | 25 | 25 | 25 | 25 | 25 | 25 | 24 | 24 | 24 | 24 | 24 | 24 | 24 24 |
| 07 | 24 | 23 | 23 | 23 | 23 | 23 | 23 | 23 | 23 | 23 | 23 | 23 | 23 | 23 | 24 24 |
| 08 | 24 | 24 | 24 | 24 | 24 | 24 | 24 | 25 | 25 | 25 | 25 | 25 | 25 | 26 | 26 26 |
| 09 | 26 | 27 | 27 | 27 | 27 | 28 | 28 | 28 | 28 | 29 | 29 | 29 | 2A | 2A | 2A 2B |
| 0A | 2B | 2B | 2C | 2C | 2D | 2D | 2D | 2E | 2E | 2F | 2F | 30 | 30 | 31 | 31 31 |
| 0B | 32 | 32 | 33 | 33 | 34 | 34 | 35 | 35 | 36 | 36 | 37 | 38 | 38 | 39 | 39 3A |
| 0C | 3A | 3B | 3B | 3C | 3D | 3D | 3E | 3E | 3F | 3F | 40 | 41 | 41 | 42 | 42 43 |
| 0D | 44 | 44 | 45 | 45 | 46 | 47 | 47 | 48 | 49 | 49 | 4A | 4A | 4B | 4C | 4C 4D |
| 0E | 4D | 4E | 4F | 4F | 50 | 50 | 51 | 52 | 52 | 53 | 54 | 54 | 55 | 55 | 56 56 |
| 0F | 57 | 58 | 58 | 59 | 59 | 5A | 5A | 5B | 5C | 5C | 5B | 5D | 5E | 5E | 5F 5F |
| 10 | 60 | 60 | 61 | 61 | 62 | 62 | 63 | 63 | 64 | 64 | 65 | 65 | 66 | 66 | 66 67 |
| 11 | 67 | 68 | 68 | 69 | 69 | 69 | 6A | 6A | 6A | 6B | 6B | 6B | 6C | 6C | 6C 6D |
| 12 | 6D | 6D | 6E | 6E | 6E | 6E | 6F | 6F | 6F | 6F | 6F | 70 | 70 | 70 | 70 70 |
| 13 | 70 | 71 | 71 | 71 | 71 | 71 | 71 | 71 | 71 | 71 | 71 | 71 | 71 | 72 | 72 72 |
| 14 | 72 | 72 | 72 | 71 | 71 | 71 | 71 | 71 | 71 | 71 | 71 | 71 | 71 | 71 | 70 70 |
| 15 | 70 | 70 | 70 | 70 | 6F | 6F | 6F | 6F | 6F | 6E | 6E | 6E | 6E | 6D | 6D 6D |
| 16 | 6C | 6C | 6C | 6B | 6B | 6B | 6A | 6A | 6A | 69 | 69 | 69 | 68 | 68 | 67 67 |
| 17 | 67 | 66 | 66 | 65 | 65 | 64 | 64 | 63 | 63 | 62 | 62 | 61 | 61 | 60 | 60 5F |
| 18 | 5F | 5E | 5E | 5D | 5D | 5C | 5C | 5B | 5B | 5A | 59 | 59 | 58 | 58 | 57 57 |
| 19 | 56 | 55 | 55 | 54 | 54 | 53 | 52 | 2D | 2C | AB | EB | EB | EB | EB | EB EB |
| 1A | 4E | 4D | 4D | 4C | 4C | 4B | 4B | 4A | 4A | 49 | 49 | 48 | 48 | 47 | 47 46 |
| 1B | 46 | 45 | 45 | 44 | 44 | 43 | 43 | 42 | 42 | 41 | 41 | 40 | 40 | 3F | 3F 3E |
| 1C | 3E | 3D | 3D | 3C | 3C | 3B | 3B | 3A | 3A | 39 | 39 | 39 | 38 | 38 | 37 37 |
| 1D | 36 | 36 | 35 | 35 | 35 | 34 | 34 | 33 | 33 | 32 | 32 | 32 | 31 | 31 | 31 30 |
| 1E | 30 | 2F | 2F | 2F | 2E | 2E | 2E | 2D | 2D | 2D | 2C | 2C | 2C | 2B | 2B 2B |

| 1F | 2 A 2 A 2 A 2 A 2 9 2 9 2 9 2 8 2 8 2 8 2 8 2 8 2 7 2 7 2 7 2 7 |
| 20 | 2 6 2 6 2 6 2 6 2 6 2 6 2 5 2 5 2 5 2 5 2 5 2 5 2 4 2 4 2 4 2 4 |
| 21 | 2 4 2 4 2 4 2 4 2 4 2 4 2 4 2 4 2 3 2 3 2 3 2 3 2 3 2 3 2 3 2 3 |
| 22 | 2 3 2 3 2 3 2 3 2 3 2 3 2 3 2 4 2 4 2 4 2 4 2 4 2 4 2 4 2 4 2 4 |
| 23 | 2 4 2 4 2 5 2 5 2 5 2 5 2 5 2 5 2 5 2 6 2 6 2 6 2 6 2 6 2 7 2 7 |
| 24 | 2 7 2 7 2 7 2 8 2 8 2 8 2 8 2 9 2 9 2 9 2 9 2 A 2 A 2 A 2 B 2 B |
| 25 | 2 B 2 C 2 C 2 C 2 C 2 D 2 D 2 D 2 E 2 E 2 F 2 F 2 F 3 0 3 0 3 0 |
| 26 | 3 1 3 1 3 2 3 2 3 2 3 3 3 3 3 4 3 4 3 4 3 5 3 5 3 6 3 6 3 7 3 7 |
| 27 | 3 7 3 8 3 8 3 9 3 9 3 A 3 A 3 B 3 B 3 C 3 C 3 D 3 D 3 E 3 E 3 F |
| 28 | 3 F 3 F 4 0 4 0 4 1 4 1 4 2 4 2 4 3 4 3 4 4 4 4 4 5 4 6 4 6 4 7 |
| 29 | 4 7 4 8 4 8 4 9 4 9 4 A 4 A 4 B 4 B 4 C 4 C 4 D 4 D 4 E 4 E 4 F |
| 2A | 4 F 5 0 5 0 5 1 5 1 5 2 5 2 5 3 5 3 5 4 5 4 5 5 5 5 5 6 5 6 5 7 |
| 2B | 5 7 5 8 5 8 5 9 5 9 5 A 5 A 5 B 5 B 5 B 5 C 5 C 5 D 5 D 5 E 5 E |
| 2C | 5 F 5 F 5 F 6 0 6 0 6 1 6 1 6 2 6 2 6 2 6 3 6 3 6 4 6 4 6 4 6 5 |
| 2D | 6 5 6 5 6 6 6 6 6 7 6 7 6 7 6 8 6 8 6 8 6 9 6 9 6 9 6 A 6 A 6 A |
| 2E | 6 A 6 B 6 B 6 B 6 C 6 C 6 C 6 C 6 D 6 D 6 D 6 D 6 E 6 E 6 E 6 E |
| 2F | 6 E 6 F 6 F 6 F 6 F 6 F 7 0 7 0 7 0 7 0 7 0 7 0 7 0 7 1 7 1 7 1 |
| 30 | 7 1 7 1 7 1 7 1 7 1 7 1 7 1 7 1 7 1 7 1 7 1 7 1 7 2 7 2 7 2 7 2 |
| 31 | 7 2 7 2 7 2 7 1 7 1 7 1 7 1 7 1 7 1 7 1 7 1 7 1 7 1 7 1 7 1 7 1 |
| 32 | 7 1 7 0 7 0 7 0 7 0 7 0 7 0 7 0 6 F 6 F 6 F 6 F 6 F 6 E 6 E 6 E |
| 33 | 6 E 6 E 6 D 6 D 6 D 6 D 6 C 6 C 6 C 6 C 6 B 6 B 6 B 6 B 6 A 6 A |
| 34 | 6 A 6 9 6 9 6 9 6 8 6 8 6 8 6 7 6 7 6 7 6 6 6 6 6 6 6 5 6 5 6 4 |
| 35 | 6 4 6 4 6 3 6 3 6 2 6 2 6 2 6 1 6 1 6 0 6 0 6 0 5 F 5 F 5 E 5 E |
| 36 | 5 D 5 D 5 C 5 C 5 C 5 B 5 B 5 A 5 A 5 9 5 9 5 8 5 8 5 7 5 7 5 6 |
| 37 | 5 6 5 5 5 5 5 4 5 4 5 3 5 3 5 2 5 2 5 1 5 1 5 0 5 0 4 F 4 F C E |
| 38 | B E B E B E B E B E B E B E B E B E B E B E B E B E B E B E B E |
| 39 | B E B E B E B E B E B E B E B E B E B E B 2 B E B E B E B E B E B E B E |

| | | | | | | | | | | | | | | | | |
|----|----|----|----|----|----|----|----|----|----|----|----|----|----|----|----|----|
| 3A | 57 | 56 | 55 | 54 | 54 | 53 | 52 | 51 | 51 | 50 | 4F | 4E | 4D | 4D | 4C | 4B |
| 3B | 4A | 4A | 49 | 48 | 47 | 47 | 46 | 45 | 44 | 44 | 43 | 42 | 41 | 41 | 40 | 3F |
| 3C | 3E | 3E | 3D | 3C | 3B | 3B | 3A | 39 | 39 | 38 | 37 | 37 | 36 | 35 | 35 | 34 |
| 3D | 33 | 33 | 32 | 32 | 31 | 30 | 30 | 2F | 2F | 2E | 2E | 2D | 2D | 2C | 2C | 2B |
| 3E | 2B | 2A | 2A | 29 | 29 | 29 | 28 | 28 | 28 | 27 | 27 | 27 | 26 | 26 | 26 | 25 |
| 3F | 25 | 25 | 25 | 25 | 24 | 24 | 24 | 24 | 24 | 24 | 24 | 24 | 24 | 23 | 23 | 23 |
| 40 | 23 | 23 | 23 | 23 | 23 | 24 | 24 | 24 | 24 | 24 | 24 | 24 | 24 | 24 | 25 | 25 |
| 41 | 25 | 25 | 26 | 26 | 26 | 27 | 27 | 27 | 28 | 28 | 28 | 29 | 29 | 29 | 2A | 2A |
| 42 | 2B | 2B | 2C | 2C | 2D | 2D | 2E | 2E | 2F | 2F | 30 | 30 | 31 | 32 | 32 | 33 |
| 43 | 33 | 34 | 35 | 35 | 36 | 37 | 37 | 38 | 39 | 39 | 3A | 3B | 3B | 3C | 3D | 3E |
| 44 | 3E | 3F | 40 | 41 | 41 | 42 | 43 | 44 | 44 | 45 | 46 | 47 | 47 | 48 | 49 | 4A |
| 45 | 4A | 4B | 4C | 4D | 4E | 4E | 4F | 50 | 51 | 51 | 52 | 53 | 54 | 54 | 55 | 56 |
| 46 | 57 | 57 | 58 | 59 | 59 | 5A | 5B | 5C | 5C | 5D | 5E | 5E | 5F | 60 | 60 | 61 |
| 47 | 61 | 62 | 63 | 63 | 64 | 64 | 65 | 66 | 66 | 67 | 67 | 68 | 68 | 69 | 69 | 6A |
| 48 | 6A | 6B | 6B | 6B | 6C | 6C | 6D | 6D | 6D | 6E | 6E | 6E | 6F | 6F | 6F | 6F |
| 49 | 70 | 70 | 70 | 70 | 70 | 70 | 71 | 71 | 71 | 71 | 71 | 71 | 71 | 71 | 72 | 72 |
| 4A | 72 | 72 | 72 | 71 | 71 | 71 | 71 | 71 | 71 | 71 | 71 | 71 | 70 | 70 | 70 | 70 |
| 4B | 70 | 6F | 6F | 6F | 6F | 6E | 6E | 6E | 6D | 6D | 6D | 6C | 6C | 6B | 6B | 6B |
| 4C | 6A | 6A | 69 | 69 | 68 | 68 | 67 | 67 | 66 | 66 | 65 | 64 | 64 | 63 | 63 | 62 |
| 4D | 61 | 61 | 60 | 60 | 5F | 5E | 5E | 5D | 5C | 5B | 5B | 5A | 59 | 59 | 58 | D7 |
| 4E | BE | BE | BE | BE | BE | BE | BE | BE | BE | BE | BE | BE | BE | BE | BE | BE |
| 4F | BE | BE | BE | BE | BE | BE | BE | BE | BE | BE | BE | BE | BE | BE | BE | BE |
| 50 | BE | BE | BE | BE | BE | BE | BE | BE | BE | BE | BE | BE | BE | BE | BE | BE |
| 51 | BE | BE | BE | BE | BE | BE | BE | BE | BE | BE | BE | BE | BE | BE | BE | BE |
| 52 | BE | BE | BE | BE | BE | BE | BE | BE | BE | BE | BE | BE | BE | BE | BE | BE |
| 53 | C4 | BE | BE | BE | BE | BE | BE | BE | 61 | 60 | 5F | 5E | 5B | 5C | 5B | 5A |
| 54 | 59 | 58 | 57 | 56 | 55 | 54 | 53 | 51 | 50 | 4F | 4E | 4D | 4C | 4B | 4A | 49 |

| | |
|---|---|
| 55 | 4 7 4 6 4 5 4 4 4 3 4 2 4 1 4 0 3 F 3 E 3 D 3 C 3 B 3 A 3 9 3 8 |
| 56 | 3 7 3 6 3 5 3 4 3 3 3 2 3 1 3 0 2 F 2 E 2 E 2 D 2 C 2 B 2 A 2 A |
| 57 | 2 9 2 8 2 8 2 7 2 7 2 6 2 5 2 5 2 4 2 4 2 3 2 3 2 3 2 2 2 2 2 2 |
| 58 | 2 1 2 1 2 1 2 1 2 0 2 0 2 0 2 0 2 0 2 0 2 0 2 0 2 0 2 0 2 0 2 1 |
| 59 | 2 1 2 1 2 1 2 1 2 2 2 2 2 2 2 3 2 3 2 4 2 4 2 5 2 5 2 6 2 6 2 7 |
| 5A | 2 7 2 8 2 9 2 9 2 A 2 B 2 B 2 C 2 D 2 E 2 F 2 F 3 0 3 1 3 2 3 3 |
| 5B | 3 4 3 5 3 6 3 7 3 8 3 9 3 A 3 B 3 C 3 D 3 E 3 F 4 0 4 1 4 2 4 3 |
| 5C | 4 5 4 6 4 7 4 8 4 9 4 A 4 B 4 C 4 D 4 E 5 0 5 1 5 2 5 3 5 4 5 5 |
| 5D | 5 6 5 7 5 8 5 9 5 A 5 B 5 C 5 D 5 E 5 F 6 0 6 1 6 2 6 3 6 4 6 5 |
| 5E | 6 6 6 6 6 7 6 8 6 9 6 A 6 A 6 B 6 C 6 C 6 D 6 E 6 E 6 F 6 F 7 0 |
| 5F | 7 0 7 1 7 1 7 2 7 2 7 3 7 3 7 3 7 4 7 4 7 4 7 4 7 4 7 5 7 5 7 5 |
| 60 | 7 5 7 5 7 5 7 5 7 5 7 5 7 5 7 4 7 4 7 4 7 4 7 4 7 3 7 3 7 3 7 2 |
| 61 | 7 2 7 1 7 1 7 0 7 0 6 F 6 F 6 E 6 E 6 D 6 C 6 C 6 B 6 A 6 9 6 9 |
| 62 | 6 8 6 7 6 6 6 5 6 4 6 4 6 3 E 2 B 8 B E B E B E B E B E B E |
| 63 | 6 6 6 5 6 4 6 3 6 2 6 1 6 0 5 F 5 E 5 D 5 C 5 B 5 A 5 9 5 8 5 6 |
| 64 | 5 5 5 4 5 3 5 2 5 0 4 F 4 E 4 C 4 B 4 A 4 8 4 7 4 6 4 4 4 3 4 2 |
| 65 | 4 0 3 C 3 9 3 6 3 3 3 0 2 D 2 A 2 7 2 5 2 2 2 0 1 D 1 B 1 9 1 7 |
| 66 | 1 6 1 4 1 3 1 2 1 1 1 0 0 F 0 F 0 F 0 F 0 F 0 F 1 0 1 1 1 2 1 3 |
| 67 | 1 4 1 6 1 7 1 9 1 B 1 D 2 0 2 2 2 5 2 7 2 A 2 D 3 0 3 3 3 6 3 9 |
| 68 | 3 C 3 F 3 F 4 0 4 2 4 3 4 4 4 6 4 7 4 9 4 A 4 B 4 C 4 E 4 F 5 0 |
| 69 | 5 2 5 3 5 4 5 5 5 7 5 8 5 9 5 A 5 B 5 C 5 D 5 E 5 F 6 0 6 1 6 1 |
| 6A | 6 3 6 4 6 5 6 6 6 7 6 7 6 8 6 9 6 9 6 A 6 B 6 B 6 C 6 C 6 D 6 D |
| 6B | 6 E 6 E 6 E 6 E 6 F 6 F 6 F 6 F 6 F 6 F 6 F 6 F 6 F 6 F 6 F 6 F |
| 6C | 6 E 6 E 6 E 6 E 6 D 6 D 6 C 6 C 6 B 6 B 6 A 6 9 6 9 6 8 6 7 E 7 |
| 6D | D C B E B E B E B E B E B E 7 1 7 0 7 0 6 F 6 E 6 D 6 C 6 B |
| 6E | 6 A 6 8 6 7 6 6 6 4 6 3 6 1 6 0 5 E 5 C 5 B 5 9 5 7 5 5 5 3 5 1 |
| 6F | 4 F 4 E 4 C 4 A 4 8 4 6 4 4 4 1 3 F 3 B 3 6 3 2 2 E 2 A 2 6 2 3 |

| | |
|---|---|
| 70 | 1F 1C 19 16 13 11 0F 0D 0C 0B 0A 0A 0A 0B 0B 0C |
| 71 | 0E 0F 12 14 16 19 1C 20 23 27 2B 2F 33 37 3C 3F |
| 72 | 41 43 45 47 49 4B 4D 4F 51 53 55 57 58 5A 5C 5E |
| 73 | 5F 61 62 64 65 67 68 69 6B 6C 6D 6E 6F 6F 70 71 |
| 74 | 72 72 73 73 73 74 74 74 74 74 74 73 73 73 72 2F 2 |
| 75 | BE BE BE BE BE BE BE BE BE BE BE BE BE BE BE BE |
| 76 | A0 BE BE BE BE BE BE BE BE BE BE BE BE BE BE BE |
| 77 | BE BE BE BE BE BE BE BE BE BE BE BE BE BE BE BE |
| 78 | BE BE BE BE BE BE BE BE BE BE BE BE BE BE BE BE |
| 79 | BE BE BE BE BE BE BE BE BE BE BE BE BE BE BE BE |
| 7A | BE BE BE BE BE BE BE BE BE BE BE BE BE BE BE BE |
| 7B | BE BE BE BE BE BE BE BE BE BE BE BE BE BE BE BE |
| 7C | BE BE BE BE BE BE BE BE BE BE BE BE BE BE BE BE |
| 7D | BE BE BE BE BE BE BE BE BE BE BE BE BE BE BE BE |
| 7E | BE BE BE BE BE BE BE BE BE BE BE BE BE BE BE BE |
| 7F | BE BE BE BE BE BE BE BE BE BE BE BE BE BE BE BE |

19      0094162

CLAIMS:

1. A method of producing an alternating current waveform with a direct current component, each cycle of said waveform having a positive portion and a negative portion, said method characterized by:

generating, as said positive portion, a positive half cycle of a sine wave having a first frequency; and

generating, as said negative portion, a negative half cycle of a sine wave having a second frequency, wherein said second frequency does not equal said first frequency.

2. The method of claim 1 wherein the absolute magnitudes of the positive portion and the negative portion are equal.

3. The method of claim 1 or 2 wherein said second frequency is lower than said first frequency.

4. The method of claim 1 or 2 wherein said second frequency is higher than said first frequency.

5. A method of producing an alternating current waveform with a direct current component, each cycle of said waveform having a positive portion and a negative portion, wherein the absolute maximum magnitudes of said positive portion and said negative portion are equal, said method characterized by:

20                    0094162

generating, as said positive portion, a positive half cycle of a sine wave having a first frequency; and

generating, as said negative portion, a negative half cycle of a sine wave having a second frequency, wherein said second frequency does not equal said first frequency.

6. The method of claim 5 wherein said second frequency is lower than said first frequency.

7. The method of claim 5 wherein said second frequency is approximately 49.5 Hz and wherein said first frequency is approximately 102 Hz.

8. The method of claim 5 wherein said second frequency is higher than said second frequency.

FIG. I
PRIOR ART

FIG. 2
PRIOR ART

FIG. 3

0094162

0094162

2/4

FIG. 4

FIG. 5

a) LOGIC STATE  SIGNAL 53  TIME

b) LOGIC STATE  31.25 MICRO SECONDS  SIGNAL STREAM 58  TIME

c) LOGIC STATE  SIGNAL 28  TIME

FIG. 6